# EUROPÄISCHE PATENTSCHRIFT

(11) **EP 1 665 923 B1**
(45) Veröffentlichungstag und Bekanntmachung des Hinweises auf die Patenterteilung: **19.11.2008**
(21) Anmeldenummer: 05026146.0
(22) Anmeldetag: 30.11.2005
(51) Int. Cl.: A01K 1/00, A01K 1/12

(54) **Vorrichtung zum Vereinzeln von Tieren**
Apparatus for separating animals
Dispositif de séparation d'animaux

(30) Priorität: 01.12.2004 DE 102004058067
(43) Veröffentlichungstag der Anmeldung: 07.06.2006
(73) Patentinhaber: WestfaliaSurge GmbH, 59199 Bönen (DE)
(72) Erfinder: Pohlkamp, Manfred, 59302 Oelde (DE); Teckentrup, Rolf, 33334 Gütersloh (DE); Müller, Christian, Aurora, IL, 60504 (US)
(74) Vertreter: Neumann, Ditmar

(56) Entgegenhaltungen:
- GB-A- 673 991
- GB-A- 2 314 250
- US-A- 3 703 884
- US-A- 4 280 448
- US-A- 4 867 103

## Beschreibung

Der Gegenstand der Erfindung bezieht sich auf eine Vorrichtung zum Vereinzeln von Tieren sowie auf eine Melkanlage mit wenigstens einem Behandlungsbereich und einer Vorrichtung zum Vereinzeln von Tieren.

Insbesondere in Melkanlagen, jedoch nicht nur dort, ist es notwendig, Tiere einzeln bestimmten Bereichen zuzuführen. Bei einem Bereich kann es sich beispielsweise um einen Fütterungsbereich, einen Melkbereich oder dergleichen handeln, in dem eine Aktion, die im Zusammenhang mit dem Tier steht, durchgeführt wird.

Es ist allgemein bekannt, dass in Milchviehbetrieben die Tiere einer Herde Identifikationsmittel tragen, die mit entsprechenden Tieridentifikationssystemen innerhalb des Milchviehbetriebes, insbesondere der Melkanlage zusammenwirken. Mit deren Hilfe kann eine elektronische Erkennung eines Tieres erfolgen. Hierzu trägt ein jedes Tier z. B. einen Transponder. Nach Erkennung wird die erkannte Transpondemummer an einen Prozessrechner übertragen und mit einer dort hinterlegten Datenbank abgeglichen. Entsprechende Tierdaten werden dem Bereich zugeführt, den das Tier nach der Erkennung betritt.

Solche Tieridentifikationssysteme sind insbesondere im Eingangsbereich von Melkplätzen angeordnet. Die Transponder sind bei den Tieren üblicherweise am Hals, am Fuß oder als Ohrmarke angebracht. Es ist auch bekannt, dass so genannte Boli verwendet werden, bei denen einem Wiederkäuer der Sender in den Pansen eingelegt wird. Weiterhin ist der Einsatz von Implantaten möglich. Bei diesen wird der Transponder subkutan am Tier angeordnet.

Die Tiererkennung erfolgt üblicherweise als Durchlauf- oder Vorbeilauferkennung. Um eine möglichst sichere Erkennung und Zuordnung zu den Melkplätzen zu gewährleisten, ist es notwendig, dass die Tiere das Antennenfeld einzeln passieren. Hierzu wird ein Eingangsbereich üblicherweise soweit verengt, dass die Tiere den Erkennungsbereich nur einzeln passieren können.

Des weiteren ist bekannt, dass eine Tiererkennung an jedem einzelnen Melkplatz erfolgt. Man spricht hierbei von einer Einzelplatzerkennung. Der apparative Aufwand für eine Einzelplatzerkennung ist nicht unerheblich, da jeder Melkplatz mit entsprechenden Erkennungsvorrichtungen ausgestattet werden muss.

Durch die DD 288 970 A5 ist eine Vorrichtung zum Vereinzeln von Tieren mit einem durch Seitenwände begrenzten Gang bekannt. Der Gang hat einen Zugang und einen Ausgang. Die Vorrichtung weist eine Durchlasseinrichtung auf, durch die in der ersten Stellung der Gang gesperrt und in einer zweiten Stellung für ein Tier freigegeben wird. Die Durchlasseinrichtung umfasst Sperrmittel, welche den Gang in Richtung des Ausgangs im Wesentlichen keilförmig verengen.

Eine sichere Zuordnung eines Tieres zu einem Melkplatz hat eine große Bedeutung. Bei einer fehlerhaften Zuordnung von Tier zu Melkplatz werden gegebenenfalls einem Tier unzutreffende Daten zugeordnet, wie beispielsweise Milchleistung, Gesundheitsstatus oder dergleichen. Besonders problematisch ist es, wenn ein Tier, dessen Milch verworfen werden soll, nicht oder unzutreffend identifiziert wurde. Es ist daher notwendig, dass die Tiere nur einzeln den Identifikationsbereich passieren können, um Fehlerkennungen bzw. fehlerhafte Zuordnungen zu vermeiden. In einem solchen Fall kann es dazu kommen, dass ein Transponder einen anderen überlagert, weil er das Antennenfeld stärker dämpft und somit ein Tier unerkannt den Melkstand betreten kann. Dies führt dann dazu, dass alle weiteren Tiere, die in dieser Reihe den Melkstand betreten, zwar möglicherweise erkannt, jedoch den falschen Melkplätzen zugeordnet werden.

Insbesondere bei kleinen Wiederkäuern, wie z.B. Schafen und Ziegen, ist eine Verengung des Melkstandeingangsbereichs oftmals nicht ausreichend, um zu verhindem, dass mehrere Tiere gleichzeitig den Erkennungsbereich passieren. Auf Grund des speziellen Tierverhaltens bei Schafen und Ziegen, dringen diese Tiere, wenn sie zum Melken geführt werden, sehr dicht aufeinander vor den Melkstand, so dass es hierbei häufig vorkommen kann, dass sich mehrere Tiere gleichzeitig im Erkennungsbereich des Tieridentifikationssystems befinden. Darüber hinaus besteht das Problem bei kleinen Wiederkäuern, dass die Größenvariation sehr groß ist, was dazu führen kann, dass zwei oder mehrere Tiere, sich unmittelbar in dem Erkennungsbereich befinden. Eine solche Situation kann insbesondere dann auftreten, wenn die Tiere vor dem Melkstand warten müssen, bis eine Gruppe von Tieren gemolken wurde, und das Eingangstor für den Melkbereich und die nächste Gruppe von Tieren erst dann geöffnet werden kann. In einer solchen Situation kommt es häufig vor, dass eine Fehlerkennung und/oder falsche Zuordnung der Tierdaten eintritt.

Obwohl im Nachfolgenden die Erfindung mit Bezug auf das Melken von Ziegen beschrieben wird, ist der Gegenstand der Erfindung auch auf andere Milch abgebende Tiere wie insbesondere Schafe und auch z.B. Kühe, Dromedare, Esel, Y-aks, Büffel oder dergleichen anwendbar.

Der Gegenstand der Erfindung ist nicht nur dazu geeignet, Tiere vor einem Melken zu vereinzeln, wie nachfolgend beschrieben wird, sondern auch zum Vereinzeln von Tieren in anderen Bereichen, beispielsweise vor einem Fütterungsbereich, einem Sortier- oder Behandlungsbereich, geeignet.

Eine Vorrichtung zum Vereinzeln von Tieren, durch die lediglich einem Tier der Zugang zu einem Fütterungsstand ermöglicht werden soll, ist beispielsweise durch die EP 0 282 103 A1 bekannt. Die dort beschriebene Vorrichtung zum Vereinzeln von Tieren weist einen durch Seitenwände begrenzten Gang auf, der einen Zugang und einen Ausgang aufweist. Innerhalb des Ganges ist eine Durchlasseinrichtung vorgesehen, durch die in einer ersten Stellung der Gang gesperrt und in einer zweiten Stellung für ein Tier freigegeben wird. Die Durchlasseinrichtung umfasst zwei Türen, wobei eine Tür nach außen und die andere Tür nach innen schwingen kann. Die Türen haben zusammen eine gesamte Breite, die den Durchlass nur eines einzelnen Tieres der Art, für welche die Durchlassvorrichtung vorgesehen ist, auf einmal ermöglicht. Die Türen sind dabei in der geschlossenen Stellung im Wesentlichen senkrecht zur Längsrichtung des Ganges angeordnet. Problematisch bei einer solchen Vorrichtung ist, dass bei Tieren mit erheblichen Größenunterschieden nicht sicher und zuverlässig vermieden werden kann, dass zwei Tiere gleichzeitig durch die Tür hindurch gehen.

Durch die GB 2 314 250 ist eine Vorrichtung zum Vereinzeln von Tieren mit einem durch Seitenwände begrenzten Gang bekannt. Der Gang weist einen Zugang und einen Ausgang auf.

Die Breite des Ganges kann an die unterschiedlichen Größen der Schafe angepasst werden. Hierzu sind die Seitenwände aufeinander zu und voneinander weg bewegbar.

Innerhalb des Gangs ist wenigstens ein Tor angeordnet, welches in Richtung des Ausgangs öffnet, jedoch in Richtung des Eingangs schließt, so dass die sich im Gang befindenden Tiere nicht rückwärts gehen können.

Hiervon ausgehend liegt der vorliegenden Erfindung die Aufgabe zu Grunde, eine Vorrichtung zum Vereinzeln von Tieren anzugeben, durch die auch sichergestellt wird, dass auch Tiere mit erheblichen Größenunterschieden zuverlässiger vereinzelt werden.

Diese Aufgabe wird erfindungsgemäß durch eine Vorrichtung zum Vereinzeln von Tieren mit den Merkmalen des Anspruchs 1 gelöst. Vorteilhafte Weiterbildungen und Ausgestaltungen der Vorrichtung sind Gegenstand der abhängigen Ansprüche.

Die erfindungsgemäße Vorrichtung zum Vereinzeln von Tieren weist einen durch Seitenwände begrenzten Gang auf. Der Gang weist einen Zugang und Ausgang auf. Zwischen dem Zugang und dem Ausgang ist eine Durchlasseinrichtung vorgesehen durch die in einer ersten Stellung der Gang gesperrt und in einer zweiten Stellung für ein Tier freigegeben wird. Die erfindungsgemäße Vorrichtung weist wenigstens ein Sperrmittel auf, durch welches der Gang in Richtung des Ausganges im Wesentlichen keilförmig verändert wird. Der Gang weist einen Boden auf, der wannenförmig ausgebildet ist. Unter einer wannenförmigen Ausgestaltung des Bodens wird auch eine beispielsweise trapezförmige Ausformung des Bodens verstanden.

Durch diese erfindungsgemäße Vorrichtung wird der Querschnitt des Gangs derart verändert, dass lediglich ein Tier den keilförmig verengten Bereich belegen und bei einer Überführung der Durchlasseinrichtung aus der ersten Stellung in die zweite Stellung, lediglich ein Tier hindurchgehen kann. Durch die erfindungsgemäße Vorrichtung wird somit sichergestellt, dass auch Tiere mit sehr unterschiedlichen Größen nicht gleichzeitig den Gang durchlaufen können, sondern durch die Durchlasseinrichtung sicher und zuverlässig selektiert werden.

Dadurch, dass der Boden im wesentlichen wannenförmig ausgebildet ist, wird die Standfläche, die den Tieren zur Verfügung steht, reduziert, so dass die Tiere keine ausreichende Standfestigkeit erhalten, wenn beispielsweise zwei Tiere nebeneinander stehen möchten. Die wannenförmige Ausgestaltung des Gangs kann auch so ausgebildet sein, dass vom Zugang zum Ausgang hin der Krümmungsradius abnimmt. Der Boden des Gangs kann die Gestalt eines Ausschnittes einer Mantelfläche eines Kegels aufweisen.

Die erfindungsgemäße Vorrichtung zum Vereinzeln von Tieren kann zum Vereinzeln von Ziegen, Schafen, Kühen oder dergleichen verwendet werden. In Abhängigkeit von der Tiergröße wird vorgeschlagen, dass die Länge der keilförmigen Verengung in Abhängigkeit zu einer durchschnittlichen Länge von Tieren gemacht wird. Es wird vorgeschlagen, dass das Verhältnis einer Länge der keilförmigen Verengung zu einer durchschnittlichen Länge von Tieren, die zu einer Gattung gehören, größer 0,2, insbesondere größer 0,5, vorzugsweise größer 0,7 ist. Es hat sich als besonders vorteilhaft erwiesen, wenn die Länge der keilförmigen Verengung größer ist als die durchschnittliche Länge von Tieren, die zu einer Gattung gehören. Hierdurch wird auch ein höherer Durchsatz der Tiere erreicht. Darüber hinaus werden die Tiere auf Grund des Verlaufes der lichten Breite des Ganges bereits in eine vorteilhafte Führung gebracht.

Gemäß einer noch weiteren vorteilhaften Ausgestaltung der Vorrichtung wird vorgeschlagen, dass das Sperrmittel verschwenkbar angeordnet ist. Durch die Verschwenkbarkeit des Sperrmittels wird erreicht, dass bei einer Bewegung des Sperrmittels aus einer ersten Stellung in eine zweite Stellung und umgekehrt Verletzungen an Tieren vermieden werden. Darüber hinaus eröffnet eine solche vorteilhafte Weiterbildung den Vorteil einer konstruktiv einfachen und zuverlässigen Ausgestaltung der Vorrichtung zum Vereinzeln von Tieren. Alternativ oder zusätzlich kann das Sperrmittel verschiebbar angeordnet sein.

Nach einer noch weiteren vorteilhaften Ausbildung der Vorrichtung, wird vorgeschlagen, dass am Ausgang ein Tor vorgesehen ist, welches den Ausgang in einer ersten Stellung sperrt und in einer zweiten Stellung freigibt. Das Tor kann verschwenkbar und/verschiebbar angeordnet sein. Durch das Tor wird eine noch weitere Erhöhung der Sicherheit der Vereinzelung von Tieren erreicht. Das Tor kann einflügelig oder auch mehrflügelig, insbesondere zweiflügelig ausgebildet sein.

Nach einer noch weiteren vorteilhaften Ausgestaltung der Vorrichtung wird vorgeschlagen, dass das Tor und die Durchlasseinrichtung so miteinander gekoppelt sind, dass die Durchlasseinrichtung im Wesentlichen synchron mit dem Tor bewegbar ist. Bevorzugt ist hierbei eine Ausgestaltung der Vorrichtung, bei der ein erster Endbereich des Sperrmittels gelenkig mit dem Tor und ein dem ersten gegenüberliegender zweiter Endbereich des Sperrmittels in Längsrichtung des Ganges verschiebbar mit einer Struktur verbunden ist. Hierdurch wird eine mechanische Kopplung des Spemnittels mit dem Tor hergestellt, die eine synchrone Bewegung des Sperrmittels der Durchlasseinrichtung und des Tores ermöglicht. Die Kopplung kann elektronisch erfolgen.

Alternativ zu einer solchen Ausgestaltung, kann die Vorrichtung auch so ausgebildet sein, dass ein erster Endbereich des Sperrmittels verschiebbar mit dem Tor und ein dem ersten gegenüberliegender zweiter Endbereich gelenkig mit einer Struktur verbundne sind.

Bei der Struktur kann es sich um ein separates Bauteil handeln. Bevorzugt ist eine Ausgestaltung, bei der die Struktur wenigstens ein Teil einer Seitenwand ist, so dass ein kompakter Aufbau der Vorrichtung ermöglicht wird.

Insbesondere bei kleinen Wiederkäuern wie z.B. Schafen und Ziegen besteht die Gefahr auf Grund des speziellen Tierverhaltens, dass Tiere übereinander klettern. Um dies zu verhindern, wird nach einer noch weiteren vorteilhaften Ausgestaltung der Vorrichtung vorgeschlagen, dass der Gang ein Dach aufweist, durch das die Bewegungsfreiheit der Tiere in vertikaler Richtung begrenzt wird.

Nach einem noch weiteren erfinderischen Gedanken wird eine Anlage mit wenigstens einem Behandlungsbereich, insbesondere einem Melkplatz, wenigstens einem Gang zu dem Behandlungsbereich vorgeschlagen, wobei die Melkanlage wenigstens eine Vorrichtung zum Vereinzeln von Tieren nach einem der Ansprüche 1 bis 12 aufweist. Durch diese erfindungsgemäße Anlage wird eine sicherere Zuordnung von Tieren zu einzelnen Melkplätzen erreicht. Darüber hinaus wird vermieden, dass insbesondere bei einer Melkanlage für Ziegen mehr als ein Tier zu einem Melkplatz gelangt.

Vorteilhafterweise ist die erfindungsgemäße Melkanlage mit einem Identifikationssystem ausgestattet, dass vorzugsweise der Durchlasseinrichtung der Vorrichtung zum Vereinzeln von Tieren nachgeordnet ist. Hierdurch wird die Möglichkeit geschaffen Tiere individuell zu erkennen und eine Melkplatzbelegung zutreffend festzustellen. Das Tieridentifikationssystem umfasst wenigstens eine Antenne.

Weitere Vorteile und Einzelheiten werden an Hand der in der Zeichnung dargestellten Ausführungsbeispiele erläutert, ohne das der Gegenstand der Erfindung auf die konkreten Ausführungsbeispiele beschränkt wird.

Es zeigt:
- Figur 1.: schematisch ein erstes Ausführungsbeispiel einer Vorrichtung zum Vereinzeln von Tieren,
- Figur 2: ein zweites Ausführungsbeispiel einer Vorrichtung zum Vereinzeln von Tieren,
- Figur 3: ein drittes Ausführungsbeispiel einer Vorrichtung zum Vereinzeln von Tieren,
- Figur 4: ein Ausführungsbeispiel einer Vorrichtung zum Vereinzeln von Tieren mit einer Schiebetür im Ausgang,
- Figur 5: in einer perspektivischen Ansicht ein fünftes Ausführungsbeispiel einer Vorrichtung zum Vereinzeln von Tieren, und
- Figur 6: in einer Draufsicht und in einer Stellung, in der der Gang gesperrt ist und in einer Draufsicht die Vorrichtung nach Figur 5.

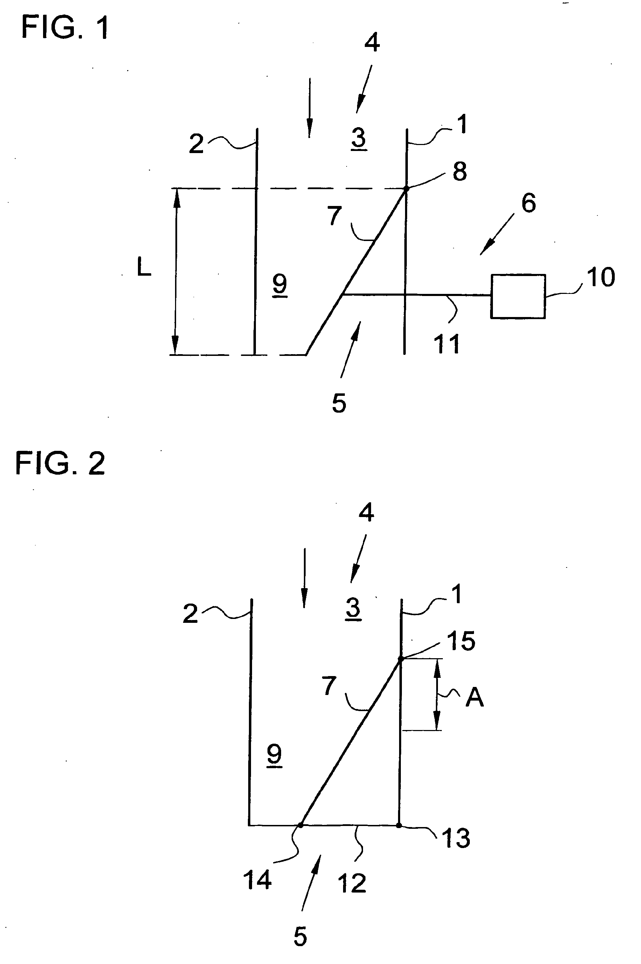

Zum Vereinzeln von Tieren, insbesondere von Milch abgebenden Tieren ist in der Figur 1 ein erstes Ausführungsbeispiel einer solchen Vorrichtung dargestellt. Die Vorrichtung weist einen durch Seitenwände 1, 2 begrenzten Gang 3 auf. Der Gang 3 hat einen Zugang 4 und einen Ausgang 5.

Zum Vereinzeln von Tieren ist eine Durchlasseinrichtung 6 vorgesehen, durch die in einer ersten Stellung der Gang 3 gesperrt und in einer zweiten Stellung für ein Tier freigegeben wird. Die Durchlasseinrichtung weist in dem dargestellten Ausführungsbeispiel ein Sperrmittel 7 auf, durch den der Gang 3 in Richtung des Ausgangs 5 im Wesentlichen keilförmig verengt wird. Mit dem Bezugszeichen 9 ist die keilförmige Verengung des Ganges 3. Figur 1 zeigt das Sperrmittel 7 in der ersten Stellung, d. h. in der Stellung, in der der Gang 3 für die Tiere gesperrt ist.

Das Sperrmittel 7 ist um eine im Wesentlichen vertikal verlaufende Achse 8 verschwenkbar. Hierzu kann beispielsweise das Sperrmittel 7 über wenigstens ein Scharnier mit der Seitenwand 1 verbunden sein. Es ist auch möglich, dass die Achse 8 außerhalb des Ganges 3 liegt, so dass das Sperrmittel 7 in der zweiten Stellung den Gang 3 im Wesentlichen freigibt.

Zum Verschwenken des Sperrmittels 7 um die vertikale Achse 8 ist das Sperrmittel 7 mit einem Betätigungselement 11 verbunden. Zum Betätigen ist ein Antrieb 10 vorgesehen. Bei der Kombination Antrieb und Betätigungselement kann es sich beispielsweise um eine Zahnstange, die mit einem Zahnrad, das elektromotorisch angetrieben wird, zusammenwirken, handeln. Es ist auch möglich, dass das Sperrmittel durch eine Zylinder-Kolben-Einheit betätigt wird. Zweckmäßigerweise sind der Antrieb und das Bedienungselement so ausgebildet, dass in der geschlossenen Stellung ein Tier das Sperrmittel 7 nicht wegdrücken kann. Hierzu kann auch eine Rastereinheit vorgesehen sein, die in der ersten Stellung des Sperrmittel, dieses blockiert und erst nach Freigabe der Blockierung das Sperrmittel 7 verschwenkt werden kann.

Die Länge L der keilförmigen Verengung 9 entspricht vorzugsweise der durchschnittlichen Länge von Tieren, die zu einer Gattung gehören und für die Vorrichtung zum Vereinzeln von Tieren vorgesehen ist.

Der Antrieb 10 kann mit einer entsprechenden Steuerung verbunden sein, so dass dieser lediglich dann aktiviert wird, wenn ein entsprechendes Signal, beispielsweise dass ein Melkplatz freigeworden ist, vorliegt.

Figur 2 zeigt ein zweites Ausführungsbeispiel einer Vorrichtung zum Vereinzeln von Tieren. Die Vorrichtung weist einen durch Seitenwände 1,2 begrenzten Gang 3 auf. Über einen Zugang 4 können Tiere in den Gang gelangen. Innerhalb des Ganges ist ein Sperrmittel 7 angeordnet, durch welches der Gang 3 in Richtung eines Ausganges 5 im Wesentlichen keilförmig verengt. Die keilförmige Verengung 9 hat eine Länge, die an die Tiere, die durch die Vorrichtung vereinzelt werden sollen, angepasst ist. Am Ausgang 5 ist ein Tor 12 vorgesehen, das gelenkig angeordnet ist, so dass es um eine im Wesentlichen vertikale Achse des Gelenks 13 verschwenkbar ist. Das Sperrmittel 7 ist mit dem Tor so verbunden, dass dieses im Wesentlichen synchron mit dem Tor bewegbar ist. Figur 2 zeigt eine Stellung, in der der Ausgang 5 durch das Tor 12 geschlossen ist, wobei das Sperrmittel 7 in dieser geschlossenen Stellung des Tores 12 den Gang 3 in Richtung des Ausgangs 5 im Wesentlichen keilförmig verengt. Ein Endbereich 14 des Sperrmittels 7 ist gelenkig mit dem Tor 12 verbunden. Der gegenüberliegende Endbereich 15 ist in Längsrichtung des Gangs verschiebbar angeordnet. Die Verschiebbarkeit des Endbereichs 15 ist durch den Pfeil A dargestellt. Insbesondere ist eine Struktur vorgesehen, in der der Endbereich 15 in Längsrichtung des Gangs 3 verschiebbar ist. Die Struktur umfasst vorzugsweise einen Träger, in dem ein Langloch vorgesehen ist, in dem ein Bolzen, der mit dem Sperrmittel 7 verbunden ist, geführt wird. Andere Führungsmittel sind gleichfalls möglich. So kann beispielsweise der Endbereich 15 ein Führungselement aufweisen, welches ein Führungselement umgreift.

Das Tor 12 wird über eine nicht dargestellte Betätigungseinrichtung betätigt. Während der Bewegung des Tores bewegt sich auch das Sperrmittel, so dass während eines Öffnungsvorgangs des Tores im Wesentlichen gleichzeitig auch das Sperrmittel 7 so bewegt wird, dass es den Gang für ein Tier freigibt.

Wird das Tor 12 geschlossen, so gelangt das Sperrmittel in die in der Figur 2 dargestellte Stellung.

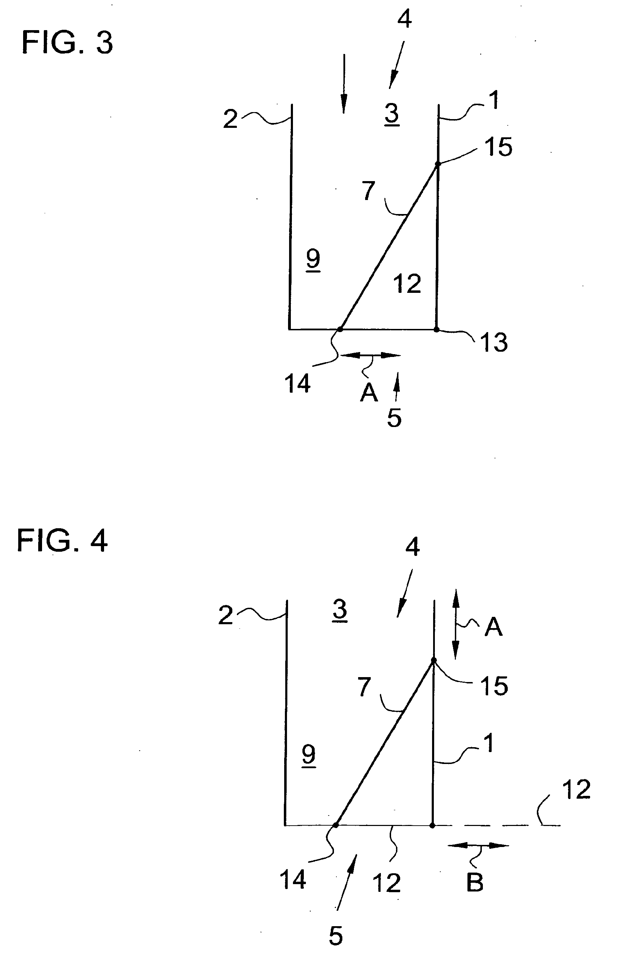

Figur 3 zeigt ein weiteres Ausführungsbeispiel einer Vorrichtung zum Vereinzeln von Tieren. Der prinzipielle Aufbau der Vorrichtung nach Figur 3 entspricht dem Aufbau der Vorrichtung nach Figur 2. Auch bei der Vorrichtung nach Figur 3 ist am Ausgang 5 ein Tor 12 vorgesehen, welches um eine im Wesentlichen vertikale Achse 13 verschwenkbar ist. Der Endbereich 14 des Sperrmittels 7 ist mit dem Tor 12 verschiebbar verbunden, so dass, wie in der Figur 2 durch den Pfeil A dargestellt ist, dieser Endbereich 14 in Abhängigkeit von der Verschwenkbewegung des Tores 12 in Richtung der Gelenkachse 13 oder von dieser weg verschoben wird. Der Endbereich 15 des Sperrmittels 7 ist gelenkig mit einer Struktur, insbesondere mit der Seitenwand 1 verbunden.

Die Figur 4 zeigt noch ein weiteres Ausführungsbeispiel einer Vorrichtung zum Vereinzeln von Tieren mit einem durch Seitenwände 1, 2 begrenzten Gang 3. Der Gang 3 weist einen Zugang 4 und einen Ausgang 5 auf. Innerhalb des Gangs 3 ist ein Sperrmittel 7 vorgesehen, durch welches der Gang 3 in Richtung des Ausgangs 5 im Wesentlichen keilförmig 9 verengt wird. Der Ausgang 5 ist durch ein Tor 12 verschließbar bzw. öffnenbar. Bei dem Tor 12 handelt es sich um ein Schiebetor, welches im Wesentlichen quer zur Längsrichtung des Ganges entlang des Pfeils B hin und her verschiebbar ist. Gestrichelt ist in der Figur 4 eine Stellung des Tores 12 dargestellt, in der das Tor 12 den Ausgang 5 freigibt. Mit dem Tor 12 ist gelenkig ein Endbereich 14 des Sperrmittels 7 verbunden. Der gegenüberliegende Endbereich 15 des Sperrmittels 7 ist in Längsrichtung des Ganges verschiebbar angeordnet. In der Figur 4 ist die Vorrichtung zum Vereinzeln von Tieren in einer Stellung dargestellt, in der das Tor 12 den Ausgang 5 verschließt und das Sperrmittel 7 den Gang 3 in Richtung des Ausgangs 5 im Wesentlichen keilförmig verengt. Wird das Tor 12 nach rechts in der Figur 4 verschoben, so gleitet der Endbereich 15 in Richtung des Ausgangs 4, wodurch zum Einen der Ausgang 5 und zum Anderen der Gang 3 frei gegeben werden. Das Sperrmittel 7 und das Tor 12 sind mechanisch so gekoppelt, dass diese synchron bewegbar sind. Durch die mechanische Koppelung bedarf es für die Bewegung des Sperrmittels 7 keiner zusätzlichen Antriebseinheiten.

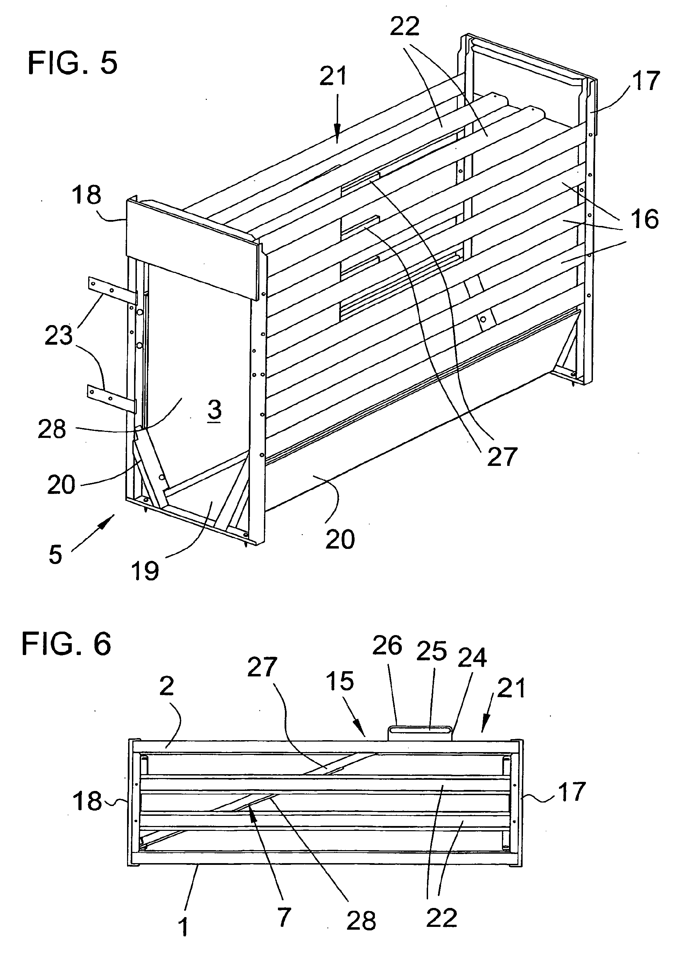

Der Figur 5 ist einer perspektivischen Ansicht eine weitere Ausführungsform einer Vorrichtung zum Vereinzeln von Tieren dargestellt. Die Vorrichtung weist Seitenwände 1 und 2 auf, die durch sich in Längsrichtung erstreckende Streben 16 gebildet sind. Die Streben sind mit einem vorderen Rahmen 17 und mit einem hinteren Rahmen 18 verbunden. Der Boden 19 des Ganges 3 ist im Wesentlichen wannenförmig ausgebildet. Hierzu sind die unteren Bereiche 20 geneigt ausgebildet. Durch diese Maßnahme wird die Auftrittsfläche, die für die Tiere zur Verfügung steht, verringert, ohne dass der Gang 3 schmaler gemacht wird. Um die Aktivitäten eines Tieres innerhalb des Ganges weiter zu begrenzen ist der Gang 3 mit einem Dach 21 versehen. Auch das Dach 21 ist durch Streben 22 gebildet, die mit dem vorderen und dem hinteren Rahmen 17, 18 verbunden sind.

Innerhalb des Gangs 3 ist ein Sperrmittel 7 vorgesehen. Das Sperrmittel 7 ist im vorderen Bereich über Scharniere 23 mit einer nicht dargestellten Schiebetür verbunden. Ein Endbereich 15 des Sperrmittels 7 ist mit der Seitenwand 2 so verbunden, dass dieser in Längsrichtung verschiebbar ist. Hierzu ist wenigstens eine Führung 24 vorgesehen, die in Form eines Winkelblechs ausgebildet ist und mit einer Strebe 16 der Seitenwand 2 verbunden. Die Führung 24 weist ein Langloch 25, in dem ein Bolzen 26, der mit dem Sperrmittel 7 verbunden ist, geführt wird.

Das Sperrmittels 7 ist durch Traversen 27 gebildet. Die Breite der Traversen 27 ist so gewählt, dass in der zweiten Stellung des Sperrmittels 7, die Traversen 27 in den Spalten zwischen die Streben 16 hineinragen können. An den Traversen 27 ist eine Matte 28 befestigt, bei der es sich beispielsweise um eine Gummimatte handeln kann.

Insbesondere im Bereich des Ausgangs 5 kann eine nicht dargestellte Tieridentifikationseinheit angeordnet sein. Bei der Tieridentifikationseinheit handelt es sich vorzugsweise um eine Antenne, durch die die Tiere, die vereinzelt werden, erkannt werden.

### BEZUGSZEICHENLISTE

- 1.: Seitenwand
- 2.: Seitenwand
- 3.: Gang
- 4.: Zugang
- 5.: Ausgang
- 6.: Durchlasseinrichtung
- 7.: Sperrmittel
- 8.: Achse
- 9.: keilförmige Verengung
- 10.: Antrieb
- 11.: Betätigungselement
- 12.: Tor
- 13.: Gelenk
- 14.: Endbereich
- 15.: Endbereich
- 16.: Strebe
- 17.: Rahmen
- 18.: Rahmen
- 19.: Boden
- 20.: unterer Bereich
- 21.: Dach
- 22.: Streben
- 23.: Scharnier
- 24.: Führung
- 25.: Langloch
- 26.: Bolzen
- 27.: Traverse
- 28.: Matte

## Patentansprüche

1. Vorrichtung zum Vereinzeln von Tieren mit einem durch Seitenwände (1, 2) begrenzten Gang (3), der einen Zugang (4) und einen Ausgang (5) aufweist, und mit einer Durchlasseinrichtung (6), durch die in einer ersten Stellung der Gang (3) gesperrt und in einer zweiten Stellung für ein Tier freigegeben wird, wobei die Durchlasseinrichtung (6) wenigstens ein Sperrmittel (7) aufweist, durch welches der Gang (3) in Richtung des Ausgangs (5) im wesentlichen keilförmig verengt wird, **dadurch gekennzeichnet, dass** der Gang (3) einen Boden (19) aufweist, der wannenförmig ausgebildet ist, das Verhältnis einer Länge (L) der keilförmigen Verengung (9) zu einer durchschnittlichen Länge von Tieren (L_{T}), die zu einer Gattung gehören größer 0,2 ist.

2. Vorrichtung nach Anspruch 1, **dadurch gekennzeichnet, dass** das Verhältnis einer Länge (L) der keilförmigen Verengung (9) zu einer durchschnittlichen Länge von Tieren (L_{T}), die zu einer Gattung gehören, größer 0,5, vorzugsweise größer 0,7 ist.

3. Vorrichtung nach Anspruch 1 oder 2, **dadurch gekennzeichnet, dass** Sperrmittel (7) verschwenkbar angeordnet ist.

4. Vorrichtung nach Anspruch 1, 2 oder 3, **dadurch gekennzeichnet, dass** das Sperrmittel (7) verschieblich angeordnet ist.

5. Vorrichtung nach einem der Ansprüche 1 bis 4, **dadurch gekennzeichnet, dass** am Ausgang (5) ein Tor (12) vorgesehen ist, welches den Ausgang (5) in einer ersten Stellung sperrt und in einer zweiten Stellung freigibt.

6. Vorrichtung nach Anspruch 5, **dadurch gekennzeichnet, dass** das Tor (12) verschwenkbar angeordnet ist.

7. Vorrichtung nach Anspruch 6, **dadurch gekennzeichnet, dass** das Tor (12) verschieblich angeordnet ist.

8. Vorrichtung nach Anspruch 5, 6 oder 7, **dadurch gekennzeichnet, dass** das Tor (12) und die Durchlasseinrichtung (6) so miteinander gekoppelt sind, dass die Durchlasseinrichtung (6) im wesentlichen synchron mit dem Tor (12) bewegbar ist.

9. Vorrichtung nach Anspruch 8, **dadurch gekennzeichnet, dass** ein erster Endbereich (14) des Sperrmittels (7) gelenkig mit dem Tor (12) und ein dem ersten gegenüberliegender zweiter Endbereich (14, 15) in Längsrichtung des Gangs (3) verschieblich mit einer Struktur verbunden sind.

10. Vorrichtung nach Anspruch 8, **dadurch gekennzeichnet, dass** ein erster Endbereich (14) des Sperrmittels (7) verschieblich mit dem Tor (12) und ein dem ersten gegenüberliegender zweiter Endbereich (15) gelenkig mit einer Struktur verbunden sind.

11. Vorrichtung nach Anspruch 9 oder 10, **dadurch gekennzeichnet, dass** die Struktur wenigstens ein Teil einer Seitenwand (1, 2) ist.

12. Vorrichtung nach einem der Ansprüche 1 bis 11, **dadurch gekennzeichnet, dass** der Gang (3) ein Dach (21) aufweist.

13. Melkanlage mit wenigstens einem Behandlungsbereich, insbesondere einem Melkplatz, wenigstens einem Gang (3) zu dem Behandlungsbereich und mit wenigstens einer Vorrichtung zum Vereinzeln von Tieren nach einem der Ansprüche 1 bis 12.

## Claims

1. Apparatus for separating animals, with a passageway (3) which is delimited by side walls (1, 2) and has an entrance (4) and an exit (5), and with a pass-through device (6) by means of which, in a first position, the passageway (3) is blocked and, in a second position, is opened up for an animal, wherein the pass-through device (6) has at least one blocking means (7) by means of which the passageway (3) is constricted in a substantially wedge-shaped manner in the direction of the exit (5), **characterized in that** the passageway (3) has a base (19) which is of trough-shaped design, and the ratio of a length (L) of the wedge-shaped constriction (9) to an average length of animals (L_{T}) belonging to a genus is greater than 0.2.

2. Apparatus according to Claim 1, **characterized in that** the ratio of a length (L) of the wedge-shaped constriction (9) to an average length of animals (L_{T}) belonging to a genus is greater than 0.5, preferably greater than 0.7.

3. Apparatus according to Claim 1 or 2, **characterized in that** the blocking means (7) is arranged in a manner such that it can be pivoted.

4. Apparatus according to Claim 1, 2 or 3, **characterized in that** the blocking means (7) is arranged in a manner such that it is displaceable.

5. Apparatus according to one of Claims 1 to 4, **characterized in that** a gate (12) is provided at the exit (5), said gate, in a first position, blocking the exit (5) and, in a second position, opening it up.

6. Apparatus according to Claim 5, **characterized in that** the gate (12) is arranged in a manner such that it can be pivoted.

7. Apparatus according to Claim 6, **characterized in that** the gate (12) is arranged in a manner such that it is displaceable.

8. Apparatus according to Claim 5, 6 or 7, **characterized in that** the gate (12) and the pass-through device (6) are coupled to each other in such a manner that the pass-through device (6) can be moved substantially synchronously with the gate (12).

9. Apparatus according to Claim 8, **characterized in that** a first end region (14) of the blocking means (7) is connected in an articulated manner to the gate (12), and a second end region (14, 15) lying opposite the first end region is connected to a structure in a manner such that it is displaceable in the longitudinal direction of the passageway (3).

10. Apparatus according to Claim 8, **characterized in that** a first end region (14) of the blocking means (7) is connected displaceably to the gate (12), and a second end region (15) lying opposite the first end region is connected to a structure in an articulated manner.

11. Apparatus according to Claim 9 or 10, **characterized in that** the structure is at least part of a side wall (1, 2).

12. Apparatus according to one of Claims 1 to 11, **characterized in that** the passageway (3) has a roof (21).

13. Milking installation with at least one treatment region, in particular a milking place, at least one passageway (3) to the treatment region and with at least one apparatus for separating animals according to one of Claims 1 to 12.

## Revendications

1. Dispositif de séparation d'animaux, comprenant un chemin (3) limité par des parois latérales (1, 2), qui présente une entrée (4) et une sortie (5), et comprenant un dispositif de passage (6) à travers lequel, dans une première position, le chemin (3) est bloqué, et dans une deuxième position, le chemin (3) est libéré pour permettre le passage d'un animal, le dispositif de passage (6) présentant au moins un moyen de blocage (7) qui permet de réduire sensiblement en forme de coin le chemin (3) dans la direction de la sortie (5), **caractérisé en ce que** le chemin (3) présente un sol (19) qui est réalisé en forme de cuve et le rapport d'une longueur (L) du rétrécissement en forme de coin (9) à une longueur moyenne des animaux (L_{T}) d'une espèce étant supérieur à 0,2.

2. Dispositif selon la revendication 1, **caractérisé en ce que** le rapport d'une longueur (L) du rétrécissement en forme de coin (9) à une longueur moyenne des animaux (L_{T}) d'une espèce est supérieur à 0,5, de préférence supérieur à 0,7.

3. Dispositif selon la revendication 1 ou 2, **caractérisé en ce que** le moyen de blocage (7) est disposé de manière pivotante.

4. Dispositif selon la revendication 1, 2 ou 3, **caractérisé en ce que** le moyen de blocage (7) est disposé de manière coulissante.

5. Dispositif selon l'une quelconque des revendications 1 à 4, **caractérisé en ce que** l'on prévoit à la sortie (5) une porte (12) qui bloque la sortie (5) dans une première position et qui la libère dans une deuxième position.

6. Dispositif selon la revendication 5, **caractérisé en ce que** la porte (12) est disposée de manière pivotante.

7. Dispositif selon la revendication 6, **caractérisé en ce que** la porte (12) est disposée de manière coulissante.

8. Dispositif selon la revendication 5, 6 ou 7, **caractérisé en ce que** la porte (12) et le dispositif de passage (6) sont accouplés l'un à l'autre de telle sorte que le dispositif de passage (6) puisse être déplacé sensiblement de manière synchronisée avec la porte (12).

9. Dispositif selon la revendication 8, **caractérisé en ce qu'**une première région d'extrémité (14) du moyen de blocage (7) est connectée de manière articulée à la porte (12) et une deuxième région d'extrémité (14, 15) opposée à la première est connectée à une structure de manière à pouvoir coulisser dans la direction longitudinale du chemin (3).

10. Dispositif selon la revendication 8, **caractérisé en ce qu'**une première région d'extrémité (14) du moyen de blocage (7) est connectée de manière coulissante à la porte (12) et une deuxième région d'extrémité (15) opposée à la première est connectée de manière articulée à une structure.

11. Dispositif selon la revendication 9 ou 10, **caractérisé en ce que** la structure est au moins une partie d'une paroi latérale (1, 2).

12. Dispositif selon l'une quelconque des revendications 1 à 11, **caractérisé en ce que** le chemin (3) présente un toit (21).

13. Installation de trayage comprenant au moins une région de traitement, en particulier un poste de trayage, au moins un chemin (3) allant à la région de traitement et comprenant au moins un dispositif pour séparer des animaux, selon l'une quelconque des revendications 1 à 12.
